# EUROPEAN PATENT APPLICATION

(11) **EP 2 200 197 A2**
(43) Date of publication of application: **23.06.2010**
(21) Application number: 09179477.6
(22) Date of filing: 16.12.2009
(51) Int. Cl.: H04H 20/72, H04H 40/27, H04H 20/61, H04H 20/42, H04H 20/28

(54) **Method for providing local broadcast in a Digital Multimedia Broadcast (DMB) system and apparatus for implementing the method**

(30) Priority: 22.12.2008 KR 20080131509
(71) Applicant: Electronics and Telecommunications Research Institute, Daejeon 305-350 (KR)
(72) Inventor: Choi, Seomee, 305-301, Daejeon (KR); Bae, Byungjun, 302-777, Daejeon (KR); Yun, Joungil, 305-308, Daejeon (KR); Kim, Kwang-Yong, 305-751, Daejeon (KR); Yang, Kyu Tae, 305-729, Daejeon (KR); Lim, Jong Soo, 301-831, Daejeon (KR); Lee, Soo In, 302-120, Daejeon (KR)
(74) Representative: Betten & Resch

(57) **Abstract**

Provided is a method and apparatus for providing local broadcasting in a digital multimedia system. The apparatus receives a first transport stream broadcasted from a main broadcasting system, extracts a main broadcasting stream from the first transport stream, and is provided with a local broadcasting stream corresponding to data for a local broadcasting service. Further, a first layer signal and a second layer signal are generated according to a predetermined format by respectively multiplexing the main broadcasting stream and the local broadcasting stream. Information for notifying that there is data for a local broadcasting service is included in the first layer signal. The first layer signal and the second layer signal are hierarchically modulated and are transmitted through a different frequency bandwidth from that through which the first transport stream is transmitted.

## Description

### BACKGROUND OF THE INVENTION

### (a) Field of the Invention

The present invention relates to provide local broadcasting. More particularly, the present invention relates to a method and system for processing a stream to provide a local broadcasting service in a digital multimedia broadcasting system.

### (b) Description of the Related Art

A prior digital multimedia broadcasting (called "DMB") system multiplexes a multimedia service and transmits it through a transport stream, which causes a limit in providing a high quality multimedia service.

To solve this problem, a scheme for expanding the capacity of data transmission to a maximum of double with a hierarchical modulation method has been researched.

In addition, a scheme that divides transport streams into a base layer stream and an enhancement layer stream, processes a prior transport stream as a base layer stream, processes additional multimedia service information for a high quality service as an enhancement layer stream, and transmits them, has been provided.

A digital multimedia broadcasting system based on the schemes is also called an advanced terrestrial-digital multimedia broadcasting (AT-DMB) system.

There has been an attempt to revitalize associated industries through trying to find a method that provides a traffic broadcasting service and a bi-directional service to show diversity of broadcasting and provides a specialized service to a specific region.

Further, there has been an effort to eliminate a shadowing zone by installing a repeater or a gap filler in the shadowing zone such as a zone where buildings stand close together or the inside of a mountain to enhance the quality of the broadcasting service.

Since providing a local broadcasting service involves solving the above problems, it is required to develop a method for efficiently providing a broadcasting service.

The above information disclosed in this Background section is only for enhancement of understanding of the background of the invention and therefore it may contain information that does not form the prior art that is already known in this country to a person of ordinary skill in the art.

### SUMMARY OF THE INVENTION

The present invention has been made in an effort to provide a method and apparatus for efficiently providing a local broadcasting service in a DMB system.

In addition, the present invention has been made in an effort to provide a method and apparatus for providing a local broadcasting service without interference between signals in the DMB system.

An exemplary embodiment of the present invention provides a method for providing local broadcasting in a digital multimedia broadcasting system. The method includes: receiving a first transport stream broadcasted from a main broadcasting system; extracting a main broadcasting stream from the first transport stream; being provided with a local broadcasting stream corresponding to data for a local broadcasting service; generating a first layer signal with a predetermined format by multiplexing the main broadcasting stream, the first layer signal including local broadcasting notifying information for notifying that there is data for the local broadcasting service; generating a second layer signal with a predetermined format by multiplexing the local broadcasting stream; generating a second transport stream by hierarchically modulating the first layer signal and the second layer signal; and transmitting the second transport stream though a different frequency bandwidth from that through which the first transport stream is transmitted.

Another embodiment of the present invention provides an apparatus for providing local broadcasting in a digital multimedia broadcasting system. The apparatus includes: a signal receiving unit for receiving a first transport stream broadcasted from a main broadcasting system; a signal extractor for extracting a main broadcasting stream from the first transport stream; a local signal encoder for generating a local broadcasting stream corresponding to data for a local broadcasting service; a base layer ensemble processor for multiplexing the main broadcasting stream and outputting the same as a base layer ETI frame; an enhancement layer ensemble processor for multiplexing the local broadcasting stream and outputting the same as an enhancement layer ETI frame; a hierarchical modulator for hierarchically modulating the base layer ETI frame and the enhancement layer ETI frame and outputting them as a second transport stream; and a transmitting unit for transmitting the second transport stream though a different frequency bandwidth from that through which the first transport stream is transmitted.

Yet another embodiment of the present invention provides an apparatus for receiving a transport stream in a digital multimedia broadcasting system. The apparatus includes: a receiving processor for receiving a transport stream for digital multimedia broadcasting transmitted from a local broadcasting apparatus, demodulating the received transport stream, and outputting a base layer ETI frame and an enhancement layer ETI frame by demultiplexing the demodulated transport stream; a base layer inverse processor for outputting a main broadcasting stream corresponding to a base layer by processing the base layer ETI frame; and an enhancement layer inverse processor for outputting a local broadcasting stream corresponding to an enhancement layer by processing the enhancement layer ETI frame, wherein the base layer ETI frame and the enhancement layer ETI frame are outputted based on information that is included in a channel for providing information on the base layer ETI frame and notifies that there is data for a local broadcasting service.

### BRIEF DESCRIPTION OF THE DRAWINGS

FIG. 1 shows an example of a digital multimedia broadcasting system according to an exemplary embodiment of the present invention.
FIG. 2 shows a configuration diagram of a local broadcasting apparatus according to an exemplary embodiment of the present invention.
FIG. 3 shows a flowchart of a local broadcasting method according to an exemplary embodiment of the present invention.
FIG. 4 shows a configuration diagram of a receiving apparatus for receiving local broadcasting according to an exemplary embodiment of the present invention.

### DETAINED DESCRIPTION OF THE EMBODIMENTS

In the following detailed description, only certain exemplary embodiments of the present invention have been shown and described, simply by way of illustration. As those skilled in the art would realize, the described embodiments may be modified in various different ways, all without departing from the spirit or scope of the present invention.

Accordingly, the drawings and description are to be regarded as illustrative in nature and not restrictive. Like reference numerals designate like elements throughout the specification. In the specification, In addition, unless explicitly described to the contrary, the word "comprise" and variations such as "comprises" or "comprising" will be understood to imply the inclusion of stated elements but not the exclusion of any other elements.

Hereinafter, referring to accompanying drawings, an exemplary embodiment of the present invention will be described.

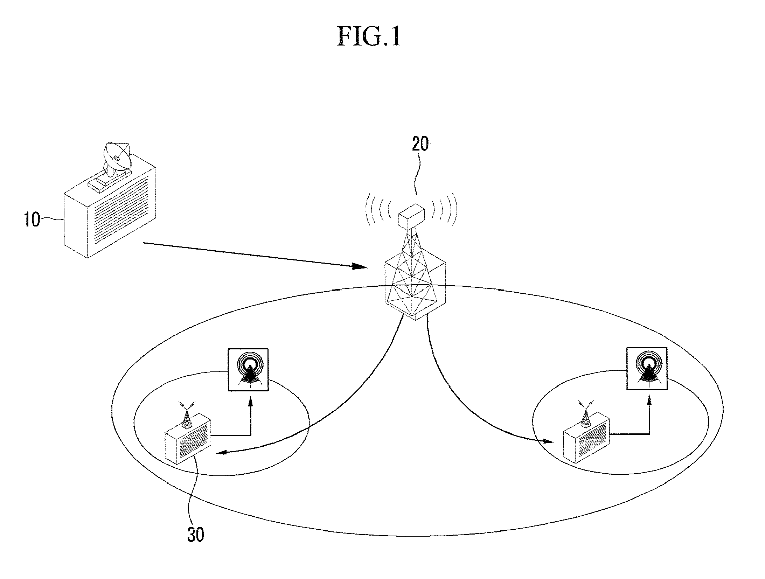

FIG. 1 shows an example of a digital multimedia broadcasting network to which a local broadcasting apparatus according to an exemplary embodiment of the present invention is applied.

The local broadcasting apparatus 30 according to an exemplary embodiment of the present invention receives a main broadcasting signal transmitted from a main broadcasting system 10 via a main transmitting apparatus 20 and processes the same. The main broadcasting system 10 generates the main broadcasting signal by integrating a plurality of broadcasting programs and transmits the same through a channel.

More specifically, the main broadcasting system 10 generates a terrestrial-digital multimedia broadcasting (T-DMB) broadcasting signal for a T-DMB service and sends the same to the main transmitting apparatus 20. The broadcasting system 10 generates broadcasting programs, that is, a service, as an ensemble by using an ensemble multiplexer (not shown), generates a T-DMB broadcasting signal by processing the ensemble based on an ensemble transport Interface (ETI), and transmits it to the main transmitting apparatus 20. Here, the main broadcasting system 10 may be connected with the main transmitting apparatus 20 through a wired network.

The ETI is a base interface for a DMB transmitting network and is defined as a logical interface (LI) layer, a network independent (NI) layer, and a network adaptation (NA) layer.

The LI layer is a base logical structure and defines basic information for generating an ensemble. The NI is a physical layer for mapping the LI layer and includes basic interfaces of ETI related equipment. The NA layer is a physical interface layer having protection against errors to be used in an environment where the errors are prone to occur, and has a structure of being mapped with the LI layer.

Meanwhile, the main transmitting apparatus 20 processes a main broadcasting signal (T-DMB broadcasting signal) sent from the main broadcasting system 10 as a DMB transport stream, which is possible to be transmitted through space wave broadcasting according to the ETI standard, and processes and broadcasts it with a signal of a frequency.

The main transmitting apparatus 20 processes the main broadcasting signal to have power that is greater than a predetermined level so that the main broadcasting signal may be broadcasted to a service area that is wider than a basic service area. The main broadcasting signal transmitted from the main transmitting apparatus 20 in a DMB network as described above is received by the local broadcasting apparatus 30 according to an exemplary embodiment of the present invention.

The local broadcasting apparatus 30 according to an exemplary embodiment of the present invention receives a DMB transport stream of the main broadcasting signal broadcasted through the main transmitting apparatus 20, and generates a DMB transport stream of a new broadcasting signal by adding a local broadcasting stream to the received DMB transport stream.

For better comprehension and ease of description, a DMB transport stream of the mains broadcasting signal broadcasted through the main broadcasting system 10 will be referred to as a first DMB transport stream, and a DMB transport stream of a local broadcasting signal generated by the local broadcasting apparatus 30 according to the exemplary embodiment of the present invention will be referred to as a second DMB transport stream.

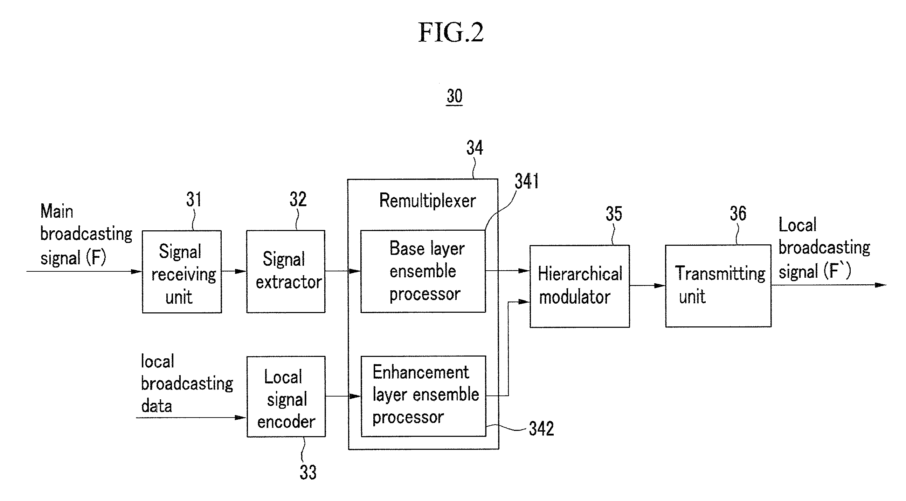

FIG. 2 shows a configuration diagram of a local broadcasting apparatus according to an exemplary embodiment of the present invention.

As shown in FIG. 2, the local broadcasting apparatus 30 according to an exemplary embodiment of the present invention includes a signal receiving unit 31, a signal extractor 32, a local signal encoder 33, a remultiplexer 34, a hierarchical modulator 35, and a transmitting unit 36.

The signal receiving unit 31 receives a first DMB transport stream broadcasted from the main transmitting apparatus 20 and performs signal processing, which includes transforming a received signal into a signal of a baseband, demodulating and decoding the transformed signal, and so on, on the received first DMB transport stream.

The signal extractor 32 extracts main broadcasting streams from the first DMB transport stream to which the signal processing has been performed, and sends the extracted main broadcasting streams to the remultiplexer 34. The main broadcasting streams include at least one among streams corresponding to video, audio, and additional data.

The local broadcasting apparatus 30 according to the exemplary embodiment of the present invention receives and processes a stream broadcasted from the main transmitting apparatus 20 of the main broadcasting system 10, and thereby there is no need to establish a network for sending the stream to the local broadcasting apparatus 30 in the main broadcasting system 10. Therefore, it is possible to provide an economical merit in establishing a broadcasting network.

Meanwhile, the local signal encoder 33 encodes elementary steams including at least one among video, audio, and data that are to be broadcasted by a local broadcasting station (not shown), and generates local broadcasting streams. The local broadcasting streams include at least one among streams corresponding to video, audio, and additional data. Data for local broadcasting may be data generated from a scalable video encoder, a stereo 3D video encoder, a multi-view video encoder, a multi-channel audio encoder, and so on.

The remultiplexer 34 generates a first layer signal and a second layer signal by respectively processing the main broadcasting streams and the local broadcasting streams, and particularly, adds information to the first layer signal, the information notifying that the second layer signal exists. The remultiplexer 34 multiplexes the main broadcasting streams that are sent from the signal extractor 32 and includes at least one among streams corresponding to video, audio, and data, and transforms and outputs the multiplexed main broadcasting stream into a stream with a format of a predetermined standard.

In addition, the remultiplexer 34 multiplexes the local broadcasting streams that are sent from the local signal encoder 33 and includes at least one among streams corresponding to video, audio, and data, and transforms and outputs the multiplexed local broadcasting stream into a stream with a predetermined format. More specifically, the remultiplexer 34 processes and outputs the multiplexed main broadcasting stream as the first layer signal, that is, a base layer ETI frame, and also processes and outputs the multiplexed local broadcasting stream as the second layer signal, that is, an enhancement layer ETI frame.

A frame in an ETI standard of an ensemble transport interface basically includes a fast information channel (FIC) and a main service channel (MSC). The MSC is a channel through which practical data such as video and audio for each service is transmitted, and includes at least one of a common interleaved frame (CIF). The FIC is a channel for transmitting information representing through which channel of the MSC the practical data is transmitted and information that is needed to receive a DMB signal, and includes at least one fast information block (FIB).

The frame of the ETI standard may include signals individually defined through an ETI (NI)_L or a service transport interface (STI) that is defined by a DMB standard or a Ethernet network. Here, the STI is an interface that is for transmitting a program between transmitting apparatuses, and is defined in Eureka-147 digital audio broadcasting.

The remultiplexer 34 includes a base layer ensemble processor 341 that generates a base layer ETI frame by multiplying and processing the main broadcasting streams, and an enhancement layer ensemble processor 342 that generates a enhancement layer ETI frame by multiplying and processing the local broadcasting streams. Particularly, the base layer ensemble processor 341 reconstitutes and outputs the base layer ETI frame by adding information, which notifies of the existence of a signal for local broadcasting, to the base layer ETI frame.

The hierarchical modulator 35 modulates the base layer ETI frame and the enhancement layer ETI frame, that is, the first layer signal and the second layer signal provided from the remultiplexer 34, and outputs a transport frame, that is, a second DMB transport stream.

For example, an ETI frame includes an FIC having 12 FIBs, and a MSC having 4 CIFs and one of the 4 CIFs includes 864 capacity units (CU). Here, the CU is the smallest unit for being recognizable and is 64 bits. The transmission frame generated by the hierarchical modulator 35 may include 25 modulation symbols.

At this time, modulation symbols for the FIC and the MSC may be a total of 75, and subcarriers of the modulation symbols may respectively transmit information of 4 bits (a base layer of 2 bits and an enhancement layer of 2 bits).

Further, the hierarchical modulator 35 respectively selects one among a plurality of hierarchical modulation modes according to symbol mapping methods of a base layer and an enhancement layer, and differently modulates frames of the base layer and the enhancement layer according to the selected modes.

The transmitting unit 36 transmits the hierarchically modulated second DMB transport stream, and particularly, the second DMB transport stream is transmitted through a different frequency bandwidth from that through which the first DMB transport stream is transmitted. The transmitting unit 36 may be operated as a local transmitting apparatus, as shown in FIG. 1.

Next, a method for providing local broadcasting in the digital multimedia broadcasting system according to the exemplary embodiment of the present invention will be described.

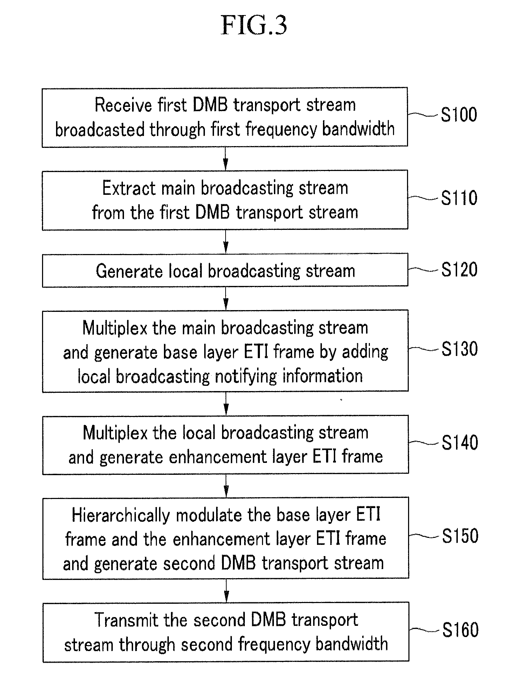

FIG. 3 shows a flowchart of the local broadcasting providing method according to the exemplary embodiment of the present invention.

As shown in FIG. 3, the local broadcasting apparatus 30 receives a first DMB transport stream that is generated by the main broadcasting system 10 for providing a T-DMB broadcasting service and is then broadcasted from the main transmitting apparatus 20 (S100).

The local broadcasting apparatus 30 performs signal processing on the received first DMB transport stream, and extracts main broadcasting streams corresponding to video, audio, and so on from the first DMB transport stream on which the signal processing has been performed (S110).

Meanwhile, the local broadcasting apparatus 30 generates local broadcasting streams by encoding elementary streams corresponding to video, audio, additional data, and so on to be broadcasted by a local broadcasting station (S120).

The local broadcasting apparatus 30 multiplexes the main broadcasting streams and generates a base layer ETI frame by transforming the multiplexed main broadcasting stream with a format according to a predetermined standard. Further, the local broadcasting apparatus 30 multiplexes the local broadcasting streams and generates an enhancement layer ETI frame by transforming the multiplexed local broadcasting stream with a format according to a predetermined standard.

Particularly, the local broadcasting apparatus 30 adds information notifying that a local broadcasting service exists (the information will be referred to as local broadcasting notifying information) to the base layer ETI frame so that a receiving end may later process an enhancement layer ETI frame corresponding to the local broadcasting service and extract the local broadcasting streams from the enhancement layer ETI frame.

That is, the local broadcasting apparatus 30 transforms the multiplexed main broadcasting stream into an ETI frame, reconstitutes the ETI frame by adding the local broadcasting notifying information to an FIC of the ETI frame, and outputs the reconstituted ETI frame as the base layer ETI frame (S130).

Also, the local broadcasting apparatus 30 transforms the multiplexed local broadcasting stream into an ETI frame, and generates the enhancement layer ETI frame by allocating video, audio, and additional data that correspond to the local broadcasting streams to an MSC of the ETI frame and by recording information on them that is allocated to the MSC in an FIC of the ETI frame (S140).

The base layer ETI frame and the enhancement layer ETI frame may be synchronized with each other so that they are controlled to be maintained in the same time over a transmitting/receiving process.

For example, the base layer ETI frame and the enhancement layer ETI frame may be synchronized with each other by respectively inserting time stamp information that is generated by the same system clock.

The local broadcasting apparatus 30 hierarchically modulates and transmits the base layer ETI frame and the enhancement layer ETI frame through a channel (S 150). Particularly, the transmitting unit 36 of the local broadcasting apparatus 30 transmits a second DMB transport stream that is generated by hierarchically modulating the base layer ETI frame and the enhancement layer ETI frame through a second frequency bandwidth (F') that is different from a first frequency bandwidth (F) through which the first DMB transport stream is transmitted (S160).

As described above, the local broadcasting signal (the second DMB transport stream) is transmitted through the second frequency bandwidth (F') that is different from the first frequency bandwidth (F) through which the main broadcasting signal (the first DMB transport stream) is transmitted, and therefore, the local broadcasting apparatus may be considered to be operated as a retransmitting apparatus of the main broadcasting station. As a result, it is possible to eliminate a shadowing zone.

In addition, it is possible to provide a local broadcasting service to a specific area while providing compatibility with a prior DMB broadcasting network, which allows a user to easily use a DMB service including the local broadcasting service and allow local broadcasting stations to provide a broadcasting service of their own.

Further, the main broadcasting signal and the local broadcasting signal provide the same content through different frequency bandwidths, which may support a hand-off function to continuously provide a broadcasting service. Therefore, efficiency of the local broadcasting service is maximized.

According to the exemplary embodiment of the present invention as described above, it is possible to provide a local broadcasting service while maintaining compatibility with the prior DMB broadcasting network.

A receiving apparatus for receiving a DMB transport stream transmitted from the local broadcasting apparatus 30 as described above is constituted based on the following structure.

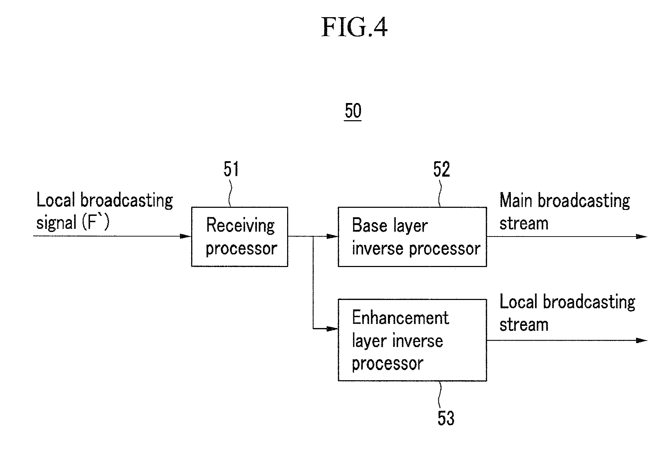

FIG. 4 shows a configuration diagram of the receiving apparatus according to an exemplary embodiment of the present invention.

A receiving apparatus 50 according to an exemplary embodiment of the present invention includes, as shown in FIG. 4, a receiving processor 51, a base layer inverse processor 52, and an enhancement layer inverse processor 53.

The receiving processor 51 receives, processes, and outputs the local broadcasting signal, that is, the second DMB transport stream, transmitted from the local broadcasting apparatus 30. More specifically, the receiving processor 51 demodulates transport streams received through a transmission channel, and demultiplexes and outputs the demodulated transport streams. That is, the second DMB transport stream transmitted through the second frequency bandwidth (F') is demodulated and is demultiplexed, and therefore the base layer ETI frame and the enhancement layer ETI frame from the second DMB transport stream are respectively output.

At this time, the receiving processor 51 determines that local broadcasting streams are in the received transport stream based on the local broadcasting notifying information included in a channel of the base layer ETI frame, that is, an FIC of the base layer ETI channel, and then divides the received transport stream into the base layer ETI frame and the enhancement layer ETI frame.

The base layer inverse processor 52 performs channel decoding on the base layer ETI frame output from the receiving processor 51, demultiplexes the same, and then outputs elementary streams corresponding to a base layer that are the main broadcasting streams.

The enhancement layer inverse processor 53 performs channel decoding on the enhancement layer ETI frame output from the receiving processor 51, demultiplexes the same, and then outputs elementary streams corresponding to an enhancement layer that are the local broadcasting streams.

The main broadcasting streams and the local broadcasting streams are later decoded by an audio/video decoder (not shown).

The above-described embodiments can be realized through a program for realizing functions corresponding to the configuration of the embodiments or a recording medium for recording the program in addition to through the above-described device and/or method, which is easily realized by a person skilled in the art.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. A method for providing local broadcasting in a digital multimedia broadcasting system, the method comprising:
receiving a first transport stream broadcasted from a main broadcasting system;
extracting a main broadcasting stream from the first transport stream;
being provided with a local broadcasting stream corresponding to data for a local broadcasting service;
generating a first layer signal with a predetermined format by multiplexing the main broadcasting stream, the first layer signal including local broadcasting notifying information for notifying that there is data for the local broadcasting service;
generating a second layer signal with a predetermined format by multiplexing the local broadcasting stream;
generating a second transport stream by hierarchically modulating the first layer signal and the second layer signal; and
transmitting the second transport stream though a different frequency bandwidth from that through which the first transport stream is transmitted.

2. The method of claim 1, wherein
the generating of a first layer signal transforms the multiplexed main broadcasting stream into an ensemble transport interface (ETI) frame, and generates a base layer ETI frame of the first layer signal by adding the local broadcasting notifying information to the ETI frame.

3. The method of claim 1 or 2, wherein
the generating of a second layer signal transforms the multiplexed local broadcasting stream into an ETI frame, allocates at least one among streams corresponding to video, audio, and additional data to a first channel of the ETI frame, recodes information on them in a second channel of the ETI frame, and generates a enhancement layer ETI frame of the second layer signal.

4. The method of claim 1, 2 or 3, wherein
the second transport stream is transmitted by a local transmitting apparatus for a local broadcasting service.

5. An apparatus for providing local broadcasting in a digital multimedia broadcasting system, the apparatus comprising:
a signal receiving unit for receiving a first transport stream broadcasted from a main broadcasting system;
a signal extractor for extracting a main broadcasting stream from the first transport stream;
a local signal encoder for generating a local broadcasting stream corresponding to data for a local broadcasting service;
a base layer ensemble processor for multiplexing the main broadcasting stream and outputting the same as a base layer ETI frame;
an enhancement layer ensemble processor for multiplexing the local broadcasting stream and outputting the same as an enhancement layer ETI frame;
a hierarchical modulator for hierarchically modulating the base layer ETI frame and the enhancement layer ETI frame and outputting them as a second transport stream; and
a transmitting unit for transmitting the second transport stream though a different frequency bandwidth from that through which the first transport stream is transmitted.

6. The apparatus of claim 5, wherein
the base layer ensemble processor transforms the multiplexed main broadcasting stream into an ETI frame, and generates the base layer ETI frame of the first layer signal by adding local broadcasting notifying information for notifying that there is data for the local broadcasting service to the ETI frame.

7. The apparatus of claim 5 or 6, wherein
the enhancement layer ensemble processor transforms the multiplexed local broadcasting stream into an ETI frame, allocates at least one among streams corresponding to video, audio, and additional data to a first channel of the ETI frame, recodes information on them in a second channel of the ETI frame, and generates the enhancement layer ETI frame of the second layer signal.

8. An apparatus for receiving a transport stream in a digital multimedia broadcasting system, the apparatus comprising:
a receiving processor for receiving a transport stream for digital multimedia broadcasting transmitted from a local broadcasting apparatus, demodulating the received transport stream, and outputting a base layer ETI frame and an enhancement layer ETI frame by demultiplexing the demodulated transport stream;
a base layer inverse processor for outputting a main broadcasting stream corresponding to a base layer by processing the base layer ETI frame; and
an enhancement layer inverse processor for outputting a local broadcasting stream corresponding to an enhancement layer by processing the enhancement layer ETI frame,
wherein the base layer ETI frame and the enhancement layer ETI frame are outputted based on information that is included in a channel for providing information on the base layer ETI frame and notifies that there is data for a local broadcasting service.

9. The apparatus of claim 7, wherein
the receiving apparatus receives and processes the transport stream transmitted from the local broadcasting apparatus through a different frequency bandwidth from that through which the main broadcasting stream is transmitted to the local broadcasting apparatus.
